# EUROPEAN PATENT APPLICATION

(11) **EP 2 116 514 A1**
(43) Date of publication of application: **11.11.2009**
(21) Application number: 08720815.3
(22) Date of filing: 25.02.2008
(51) Int. Cl.: C01G 23/00, C04B 35/626, C09K 3/14, C08K 3/24, C08L 101/00

(54) **TITANATE HAVING ALKALI METAL TITANATE BONDED THERETO, PROCESS FOR PRODUCING THE SAME, AND RESIN COMPOSITION CONTAINING TITANATE HAVING ALKALI METAL TITANATE BONDED THERETO**

(30) Priority: 02.03.2007 JP 2007053079
(71) Applicant: Otsuka Chemical Co., Ltd., Osaka-shi, Osaka 540-0021 (JP)
(72) Inventor: AKI, Minoru, Tokushima-shi Tokushima 771-0193 (JP); KAMIFUKU, Atsushi, Tokushima-shi Tokushima 771-0193 (JP)
(74) Representative: TER MEER - STEINMEISTER & PARTNER GbR
(86) International application number: PCT/JP2008/053157
(87) International publication number: WO 2008/108197

(57) **Abstract**

To obtain an alkaline metal titanate adhered to titanate, which is excellent in friction and wear characteristics when used as a friction modifier, and is excellent in mechanical properties and dielectricity when used as a dielectric material, a method for manufacturing the same, and a resin composition containing the same.

An alkaline metal titanate adhered to titanate is **characterized in that** an alkaline earth metal titanate represented by the formula (2) is adhered onto the surface of titanate represented by the formula (1):

AₓM_{y}□Ti_{2-(y+z)}O₄ (1)

wherein A and M are different from each other and represent a mono- to trivalent metal, □ represents a defective portion of Ti, X represents a positive real number which satisfies 0 < X < 1.0, and y and z each represents 0 or a positive real number which satisfies 0 < y + z < 1.0, and

BO·TiO₂ (2)

wherein B represents one or more kinds of an alkaline earth metals.

## Description

### TECHNICAL FIELD

The present invention relates to an alkaline metal titanate adhered to titanate, a method for manufacturing the same, and a resin composition containing the alkaline metal titanate adhered to titanate.

### BACKGROUND ART

As a metal titanate, granular, fibrous and tabular metal titanates are known. Of these metal titanates, a fibrous metal titanate and a tabular metal titanate have recently been used in various applications, which require dielectricity, such as antenna materials, condenser materials, laminated circuit board materials and connector materials, and friction materials such as brakes since functions such as mechanical strength, dielectricity and friction characteristics are improved by blending them with a synthetic resin.

For example, there is disclosed a composite tabular metal titanate in which a portion or all the surface of a metal titanate crystal with the composition represented by the formula: MO·TiO₂ (wherein M represents a divalent metal) is coated with an amorphous and/or crystalline TiO₂. The composite tabular metal titanate has high strength and is excellent in dielectric characteristics, and is therefore used as a dielectric material (see Patent Literature 1).

There is also disclosed a friction material in which a composite titanium compound powder comprising crystal grains of an alkaline earth metal titanate represented by the formula: RTiO₃ (wherein R represents an alkaline earth metal) and crystal grains of an alkaline metal titanate represented by the formula: M₃TiₙO₂ₙ₊₁ (wherein M represents an alkaline metal, and n represents 2 to 6) are blended as a base material in a friction material obtained by binding and molding a mixture containing a resin and a base material. The composite titanium compound powder composed of crystal grains of the alkaline metal titanate is used as a friction material having a high friction coefficient and also stably maintains a high friction coefficient over a wide temperature range (see Patent Literature 2).

Patent Literature 3 and Patent Literature 4 disclose a method for manufacturing titanates. Patent Literature 5 and Patent Literature 6 disclose titanates obtained by calcining titanates after subjecting to an acid treatment. Patent Literature 7 discloses a method for manufacturing tabular potassium octatitanate by subjecting a tabular titanate to an acid treatment to form a tabular titanate and treating the tabular titanate with an alkaline.

Patent Literature 8 discloses a method for manufacturing a composite tabular metal titanate.
Patent Literature 1: Japanese Patent Laid-Open No. 2001-253770
Patent Literature 2: Japanese Patent Laid-Open No. 08-337660
Patent Literature 3: International Publication WO99/11574 Patent Literature 4: Japanese Patent No. 3,062,497
Patent Literature 5: International Publication WO02/010069
Patent Literature 6: International Publication WO03/037797
Patent Literature 7: Japanese Patent No. 3,102,789
Patent Literature 8: Japanese Patent Laid-Open No. 2001-253770

### DISCLOSURE OF THE INVENTION

It is an object of the present invention to provide an alkaline metal titanate adhered to titanate, which is excellent in friction and wear characteristics when used as a friction modifier, and is excellent in mechanical properties and dielectricity when used as a dielectric material, a method for manufacturing the same, and a resin composition containing the alkaline metal titanate adhered to titanate.

The alkaline metal titanate adhered to titanate according to a first aspect of the present invention is **characterized in that** an alkaline earth metal titanate represented by the formula (2) is adhered onto the surface of titanate represented by the formula (1):

[chem.1] AₓM_{y}□Ti_{2-(y+z)}O₄ (1)

wherein A and M are different from each other and represent a mono- to trivalent metal, □ represents a defective portion of Ti, X represents a positive real number which satisfies 0 < X < 1.0, and y and z each represents 0 or a positive real number which satisfies 0 < y + z < 1.0, and

[chem.2] BO·TiO₂ (2)

wherein B represents one or more kinds of an alkaline earth metals.

The titanate represented by the formula (1) is, for example, a lepidocrocite type titanate, and specific examples thereof include lithium potassium titanate and magnesium potassium titanate.

The alkaline metal titanate adhered to titanate according to a second aspect of the present invention is **characterized in that** an alkaline earth metal titanate represented by the formula (2) is adhered onto the surface of titanate(3) obtained by calcining titanate represented by the formula (1) after subjecting to an acid treatment:

[chem.1] AₓM_{y}□Ti_{2-(y+z)}O₄ (1)

wherein A and M are different from each other and represent a mono- to trivalent metal, □ represents a defective portion of Ti, X represents a positive real number which satisfies 0 < X < 1.0, and y and z each represents 0 or a positive real number which satisfies 0 < y + z < 1.0, and

[chem.2] BO·TiO₂ (2)

wherein B represents one or more kinds of an alkaline earth metals.

The titanate (3) includes, for example, lithium potassium titanate represented by K_{0.5-0.7}Li_{0.27}Ti_{1.73}O_{3.85-3.95}, or magnesium potassium titanate represented by K_{0.2-0.7}M_{0.4}Ti_{1.6}O_{3.7-4}.

The alkaline metal titanate adhered to titanate according to a third aspect of the present invention is **characterized in that** an alkaline earth metal titanate represented by the formula (2) is adhered onto the surface of a tabular potassium octatitanate:

[chem.2] BO·TiO₂ (2)

wherein B represents one or more kinds of an alkaline earth metals.

The common matter of the first, second and third aspects of the present invention will be explained below as the "present invention".

In the alkaline metal titanate adhered to titanate of the present invention, the alkaline earth metal titanate represented by the formula (2) includes calcium titanate.

The alkaline metal titanate adhered to titanate of the present invention is preferably a tabular substance.

In the alkaline metal titanate adhered to titanate of the present invention, a molar ratio of the titanate represented by the formula (1), or the titanate (3), or the tabular potassium octatitanate to the alkaline earth metal titanate represented by the formula (2) is preferably 99-30:1-70. When the molar ratio of the titanate represented by the formula (1), or the titanate (3) is less than 30, and the molar ratio of the alkaline earth metal titanate is more than 70, the shape becomes indeterminate shape and it may become impossible to maintain a tabular shape.

The granular titanate of the present invention is characterized by molding the alkaline metal titanate adhered to titanate of the present invention using a binder.

The granular titanate of the present invention may be obtained by molding a mixture containing (a) the alkaline metal titanate adhered to titanate of the present invention, (b) at least one kind of a compound selected from titanate represented by the formula (1), titanate (3), a tabular potassium octatitanate, and a composite tabular metal titanate, and (c) a binder.

The method for manufacturing the alkaline metal titanate adhered to titanate of the present invention is characterized in that a mixture containing an A source (a raw material containing A), an M source (a raw material containing M) and a B source (a raw material containing B) and a Ti source (a raw material containing Ti) is calcined at a temperature of 600 to 1,300°C.

The method for manufacturing a granular titanate of the present invention is characterized by molding the alkaline metal titanate adhered to titanate of the present invention using a binder.

The method for manufacturing a granular titanate of the present invention may be a method comprising the steps of mixing (a) the alkaline metal titanate adhered to titanate of the present invention, (b) at least one kind of a compound selected from titanate represented by the formula (1), titanate (3), a tabular potassium octatitanate and a composite tabular metal titanate with (c) a binder, and molding the mixture.

The resin composition of the present invention is characterized by comprising 3 to 50% by weight of the alkaline metal titanate adhered to titanate of the present invention, or the granular titanate of the present invention.

The friction modifier of the present invention is characterized by comprising the alkaline metal titanate adhered to titanate according to any one of claims 1 to 9, or the granular titanate of the present invention.

The friction material of the present invention is characterized by comprising the friction modifier of the present invention. The content of the friction material is preferably from 3 to 50% by weight. When the content of the friction material is less than 3% by weight, friction characteristics may not be easily exhibited. In contrast, when the content of the friction material is more than 50% by weight, moldability may deteriorate.

The dielectric material of the present invention is characterized by comprising the alkaline metal titanate adhered to titanate of the present invention, or the granular titanate of the present invention.

The dielectric material composition of the present invention is characterized by including the dielectric material of the present invention. The content of the dielectric material is preferably from 3 to 60% by weight. When the content of the dielectric material is less than 3% by weight, dielectric characteristics may not be easily exhibited. In contrast, when the content of the dielectric material is more than 60% by weight, moldability may deteriorate.

### (Effect of the Invention)

According to the present invention, it is possible to provide an alkaline metal titanate adhered to titanate, which is excellent in friction and wear characteristics when used as a friction modifier, and is excellent in mechanical properties and dielectricity when used as a dielectric material, a method for manufacturing the same, and a resin composition containing the same.

### BRIEF DESCRIPTION OF THE DRAWINGS

Fig. 1 shows a SEM micrograph of Example 2 according to the present invention;
Fig. 2 shows a SEM micrograph of Example 7 according to the present invention;
Fig. 3 shows a SEM micrograph of Example 11 according to the present invention;
Fig. 4 shows an element mapping micrograph of Example 2 according to the present invention; and
Fig. 5 shows an element mapping micrograph of Example 7 according to the present invention.

### BEST MODE FOR CARRYING OUT THE INVENTION

The alkaline metal titanate adhered to titanate of the present invention is a composite titanate containing titanate represented by the formula (1) and an alkaline earth metal titanate represented by the formula (2).

A in the formula (1) is mono- to trivalent metal, and preferably at least one kind selected from K, Rb and Cs. M is mono- to trivalent metal which is different from the metal A, and preferably at least one kind selected from Li, Mg, Zn, Cu, Fe, Al, Ga, Mn and Ni.

Specific examples thereof include K_{0.80}Li_{0.27}Ti_{1.73}O₄, Rb_{0.75}Ti_{1.75}Li_{0.25}O₄, Cs_{0.70}Li_{0.23}Ti_{1.77}O₄, Ce_{0.70}□_{0.18}Ti_{1.83}O₄, Ce_{0.70}Mg_{0.35}Ti_{1.65}O₄, K_{0.8}Mg_{0.4}Ti_{1.6}O₄, K_{0.8}Ni_{0.4}Ti_{1.6}O₄, K_{0.8}Zn_{0.4}Ti_{1.6}O₄, K_{0.8}Cu_{0.4}Ti_{1.6}O₄, K_{0.8}Fe_{0.8}Ti_{1.2}O₄, K_{0.8}Mn_{0.8}Ti_{1.2}O₄, K_{0.7}Li_{0.22}Mg_{0.05}Ti_{1.73}O₄ and K_{0.67}Li_{0.2}Al_{0.07}Ti_{1.73}O₄.

Of these metals, lithium potassium titanate K_{0.80}Li_{0.27}Ti_{1.73}O₄ and magnesium potassium titanate K_{0.8}Mg_{0.4}Ti_{1.6}O₄ are preferred.

B in the formula (2) is an alkaline earth metal and is specifically at least one kind selected from Be, Mg, Ca, Sr, Ba and Ra, and is preferably Ca.

The alkaline metal titanate adhered to titanate of the present invention is obtained, for example, by a method of simultaneously mixing a raw material (A source, M source, Ti source) of titanate of the formula (1) and raw material (B source, Ti source) of an alkaline earth metal salt of the formula (2) and calcining the mixture at a temperature of 600 to 1300°C.

Patent Literature 3 discloses, as a method for manufacturing titanate of the formula (1), a method in which potassium carbonate, lithium carbonate and titanium dioxide are mixed in a ratio of K/Li/Ti = 3/1/6.5 (molar ratio), ground and then calcined at 800°C to obtain lithium potassium titanate.

In the present invention, in the case of synthesizing an alkaline metal titanate adhered to titanate when CaO·TiO₂ is used as the alkaline earth metal salt, a calcium titanate adhered to lithium potassium titanate can be obtained by simultaneously mixing a raw material of titanate with calcium hydroxide titanate and titanium dioxide as raw materials of the alkaline earth metal salt in a ratio of Ca/Ti = 1/1 (molar ratio) and calcining in the same manner as in the method disclosed in Patent Literature 3.

It is possible to use, as the method for manufacturing an alkaline metal titanate adhered to titanate of the present invention, a method of calcining a mixture, which is obtained by mixing so as to control a weight ratio of flux/raw material within a range from 0.1 to 2.0, at a temperature of 700 to 1,200°C using a halide or a sulfate of an alkaline metal or an alkaline metal as a flux in accordance with the method for manufacturing titanate disclosed in Patent Literature 4.

In the alkaline metal titanate adhered to titanate of the present invention, titanate obtained by calcining titanate represented by the formula (1) after subjecting to an acid treatment can be used as the titanate.

After manufacturing an alkaline metal titanate adhered to lithium potassium titanate containing K_{0.8}Li_{0.27}Ti_{1.73}O₄ as the titanate or an alkaline metal titanate adhered to magnesium potassium titanate containing K_{0.8}Mg_{0.4}Ti_{1.6}O₄ as the titanate according to the above manufacturing method, the pH of an aqueous slurry of the compound is adjusted within a range from 6 to 8, preferably from 6.5 to 7.5, by adding an acid to the slurry according to the method disclosed in Patent Literature 5 and Patent Literature 6 and a solid is separated from the slurry and then calcined at a temperature of about 400 to 700°C

In this case, as the alkaline metal titanate adhered to titanate, for example, an alkaline metal titanate adhered to lithium potassium titanate containing K_{0.5-0.7}Li_{0.27}Ti_{1.73}O_{3.85-3.95} as the titanate, or an alkaline metal titanate adhered to magnesium potassium titanate containing K_{0.2-0.7}Mg_{0.4}Ti_{1.6}O_{3.7-4} as the titanate is obtained.

In the alkaline metal titanate adhered to titanate of the present invention, a tabular potassium octatitanate is used as the titanate.

As a manufacturing method, after manufacturing an alkaline metal titanate adhered to lithium potassium titanate containing K_{0.8}Li_{0.27}Ti_{1.73}O₄ as the titanate, or an alkaline metal titanate adhered to magnesium potassium titanate containing K_{0.8}Mg_{0.4}Ti_{1.6}O₄ as the titanate according to the above manufacturing method, lithium potassium titanate or magnesium potassium titanate is subjected to an acid treatment to form a tabular titanic acid, which is treated with an alkali such as potassium hydroxide and then calcined at a temperature of 400 to 650°C according to the method disclosed in Patent Literature 7.

The alkaline metal titanate adhered to titanate of the present invention is characterized in that an alkaline earth metal titanate is adhered onto the surface of titanate as a granulated substance. It is considered that the alkaline earth metal titanate is melt-adhered onto the surface of the titanate since the alkaline metal titanate adhered to titanate is manufactured by preliminarily mixing titanate with a raw material of the alkaline earth metal titanate and calcining the mixture. Actually, the titanate and alkaline earth metal titanate are not separately isolated even if subjected to a classifying operation.

It is generally considered that the alkaline earth metal titanate is harder than titanate. For example, Mohs hardness of calcium titanate is about 5.5, while Mohs hardness of potassium titanate is about 4. This means that the alkaline metal titanate adhered to titanate of the present invention allows a comparatively hard alkaline earth metal titanate to adhere onto the surface of a comparatively soft titanate. Also, a molar ratio of the titanate to the alkaline earth metal titanate can be controlled within a wide range of 99-30:1-70. Thus, it is considered that hardness of a filler can be appropriately controlled when the alkaline metal titanate adhered to titanate of the present invention is used as a friction modifier.

The alkaline metal titanate adhered to titanate of the present invention can be formed into a granular titanate molded by using a binder.

It is also possible to form a granular titanate by using the following combination:
(a) an alkaline metal titanate adhered to titanate
(b) at least one kind of a compound selected from titanate represented by the formula (1), titanate obtained by calcining the titanate represented by the formula (1) after subjecting to an acid treatment, a tabular potassium octatitanate and a composite tabular metal titanate, and
(c) a binder

Examples of the compound (b) used as the granular titanate of the present invention are represented by the formula (1). Examples of the titanate include K_{0.80}Li_{0.27}Ti_{1.73}O₄, Rb_{0.75}Ti_{1.75}Li_{0.25}O₄. Cs_{0.70}Li_{0.23}Ti_{1.77}O₄, Ce_{0.70}□_{0.18}Ti_{1.83}O₄, Ce_{0.70}Mg_{0.35}Ti_{1.65}O₄, K_{0.8}Mg_{0.4}Ti_{1.6}O₄, K_{0.8}Ni_{0.9}Ti_{1.6}O₄, K_{0.8}Zn_{0.4}Ti_{1.6}O₄, K_{0.8}Cu_{0.4}Ti_{1.6}O₄, K_{0.8}Fe_{0.8}Ti_{1.2}O₄, K_{0.8}Mn_{0.8}Ti_{1.2}O₄, K_{0.76}Li_{0.22}Mg_{0.05}Ti_{1.73}O₄ and K_{0.67}Li_{0.2}Al_{0.07}Ti_{1.73}O₄. Of these compounds, lithium potassium titanate K_{0.80}Li_{0.27}Ti_{1.73}O₄ and magnesium potassium titanate K_{0.8}Mg_{0.4}Ti_{1.6}O₄ are preferred.

The titanate obtained by calcining after subjecting the titanate represented by the formula (1) to an acid treatment includes, for example, lithium potassium titanate K_{0.5-0.7}Li_{0.27}Ti_{1.73}O_{3.85-3.95}. or magnesium potassium titanate K_{0.2-0.7}Mg_{0.4}Ti_{1.6}O_{3.7-4}.

The titanate also includes a tabular potassium octatitanate.

The composite tabular titanate includes, for example, a composite tabular metal titanate wherein a portion or all the surface of a metal titanate crystal with the composition represented by the formula: MO·TiO₂ (wherein M represents divalent metal) is coated with an amorphous and/or crystalline TiO₂.
The divalent metal is preferably an alkaline earth metal, and more preferably calcium.

The composite tabular metal titanate is obtained, for example, by mixing a tabular titanium oxide compound with one or more kinds of metal compounds selected from the group consisting of oxides, hydroxides, inorganic acid salts and organic acid salts of metal elements M in a molar ratio, which satisfies a relation Ti > M, and calcining the mixture at a temperature of 500 to 1,400°C according to the method disclosed in Patent Literature 1.

The binder used as the granular titanate of the present invention is not specifically limited and known organic and inorganic binders can be used.

Specific examples of the organic binder include such as methyl cellulose, carboxymethyl cellulose (CMC), starch, carboxymethyl starch, hydroxyethyl cellulose, hydroxypropyl cellulose, polyvinyl alcohol (PVA), (meth)acrylic resin, epoxy resin, phenol resin and vinyl acetate. Moreover the organic binder may be an organic binder having a modified chemical structure and/or polymerization degree. Such a binder includes a partially saponified binder in which the saponification degree is adjusted to 90% or less by decreasing the polymerization degree of polyvinyl alcohol or a vinyl acetate polymer, and a binder in which the etherification degree is adjusted within a range from about 1 to 3 by reacting an OH group or a CH₂OH group of a cellulose-based binder with an alkyl halide or an alkylene oxide.

Specific examples of the inorganic binder include inorganic binders such as water glass, colloidal silica, colloidal alumina and silane coupling agent. Examples of the silane coupling agent include such as glycidoxypropyltrimethoxysilane, aminopropyltriethoxysilane, mercaptopropyltrimethoxysilane, mercaptopropylmethyldimethoxysilane and bis(3-triethoxysilylpropyl)tetrasulfide.

The binder is preferably an inorganic binder, and more preferably aminopropyltriethoxysilane.

These binders may be used alone, or two or more kinds of them may be used in combination.

The method for manufacturing a granular titanate of the present invention is carried out by mixing an alkaline metal titanate adhered to titanate with a binder, or those obtained by dissolving or dispersing a predetermined amount of:
(a) an alkaline metal titanate adhered to titanate,
(b) at least one kind of a compound selected from titanate represented by the formula (1), titanate obtained by calcining the titanate represented by the formula (1) after subjecting to an acid treatment, a tabular potassium octatitanate and a composite tabular metal titanate, and
(c) a binder
in a proper organic solvent, and granulating the mixture according to a conventional method, followed by drying. The mixing ratio is not specifically limited and may be appropriately selected according to properties and purposes of granules to be obtained. The amount of the binder is usually from about 0.01 to 50 parts by weight, and preferably from 0.1 to 5 parts by weight, based on 100 parts by weight of a filler of the alkaline metal titanate adhered to titanate. Examples of the granulation method include, but are not limited to, an agitation granulation method, a fluidized bed granulation method, a spray granulation method and a rolling granulation method, of which an agitation granulation method is preferred. The shape and size of granules to be obtained are not specifically limited and may be any shape and size. For example, any size can be obtained by passing through a sieve.

In the granular titanate of the present invention, surfactants may be used in addition to binders. Surfactants are not specifically limited and known surfactants can be used, and examples thereof include such as anionic, nonionic, cationic and amphoteric surfactants.

Specific examples of the anionic surfactant include, but are not limited to, a fatty acid salt, an alkyl sulfate ester salt, an alkylsufonate, an alkylaryl sufonate, an alkylnaphthalene sufonate, an alkyl sulfosuccinate, an alkyldiphenylether disufonate, an alkyl phosphate, a polyoxyethylene alkyl sulfate ester salt, a polyoxyethylene alkylallyl sulfate ester salt and a sulfosuccinate ester salt.

Specific examples of the nonionic surfactant include, but are not limited to, polyoxyethylene glycol alkyl ethers such as polyoxyethylene lauryl ether, polyoxyethylene higher alcohol ether and polyoxyethylene octylphenyl ether; polyethylene glycol fatty acid esters such as polyethylene glycol monostearate; sorbitan fatty acid esters such as sorbitan monolaurate and polyoxyethylene sorbitan monolaurate; glycol fatty acid esters such as glycol monostearate; and fatty acid monoglycerides.

Specific examples of the cationic surfactant include, but are not limited to, a higher amine haloganate, a halogenated alkyl pyridinium and a quaternary ammonium salt.

Specific examples of the amphoteric surfactant include, but are not limited to, amino acids represented by the formula: RNHR'COOH (wherein R and R' may be the same or different and represent a group CₙH₂ₙ₊₁- (n = 8 to 16)).

As these surfactants, anionic and nonionic surfactants can be preferably used.

Of these surfactants, anionic, nonionic, cationic or amphoteric surfactants may be used alone, or two or more kinds of them may be used in combination. Furthermore, two or more different compounds of one kind (for example, only an anionic surfactant) may be used in combination.

The used amount of the surfactant is not specifically limited and may be appropriately selected according to physical properties (for example, hardness, grain size, bulk specific gravity, dispersibility during use, etc.) and purposes of the objective granules, and is usually from about 0.01 to 50% by weight, and preferably from about 0.1 to 5% by weight, based on the total component.

The resulting granular titanate is added to various resins according to the applications and a molded article can be obtained from the mixture according to a conventional molding method such as an injection molding, extrusion molding, calender molding, coating molding or press molding method.

The resin, which can be used as the resin composition containing the alkaline metal titanate adhered to titanate or the granular titanate of the present invention, is not specifically limited and any known resins can be used. Examples thereof include such as polyetherimide, polyethersulfone, polyphenyleneether, polyetherketone-based resin (polyketone, polyetherketone, polyether ether ketone, polyether ketone ketone, polyether ether ketone, etc.), polycarbonate, polyolefin, polyester, polyacetal, thermoplastic polyurethane, polyamide, polyacrylate, polyvinyl chloride, polystyrene, polyvinylidene fluoride, polyvinylidene chloride, polyphenylsulfone, polysulfone, liquid crystal polymer, thermoplastic polyimide, polyallylate, polyethernitrile and thermoplastic elastomer.

The polyphenylene sulfide used in the present invention is a polymer containing, in a main chain, a structural unit represented by the formula (4):

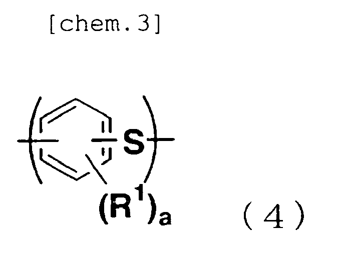

wherein R¹ is a substituent selected from an alkyl group having 6 or less carbon atoms, an alkoxyl group, a phenyl group, a carboxyl group or a metal salt thereof, an amino group, a nitro group, and a halogen atom such as a fluorine, chlorine or bromine atom, and a represents an integer from 0 to 4.

Copolymers can also be used in addition to homopolymers. Examples of the structural unit of the copolymer include such as an m-phenylene sulfide unit, a o-phenylene sulfide unit, a p,p'-diphenyleneketone sulfide unit, a p,p'-diphenylenesulfone sulfide unit, a p,p'-biphenylene sulfide unit, a p,p'-diphenylenemethylene sulfide unit, a p,p'-diphenylenecumenyl sulfide unit and a nathylsulfide unit.

The molecular structure may be any of a linear structure, a branched structure, a branched structure and a crosslinked structure, and preferably a linear structure and/or a semi-linear structure.

Examples of the polyamide include such as aliphatic nylons such as 4-nylon, 6-nylon, 6,6-nylon, 4,6-nylon, 6,10-nylon, 6,12-nylon, 11-nylon and 6,10-nylon; and aromatic nylons such as MXD6-nylon.

Examples of the polyester include such as polyethylene terephthalate, polybutylene terephthalate, polytetramethylene terephthalate, polyethylene naphthalate and polytetramethylene naphthalate.

The polycarbonate includes, for example, aromatic polycarbonates such as bisphenol A polycarbonate.

Polyphenylene ether includes a polymer containing, in a main chain, a structural unit represented by the formula (5):

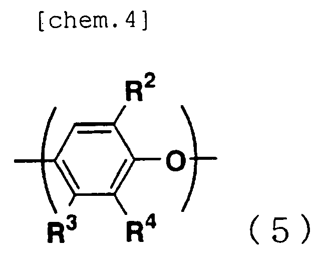

wherein R⁴ represents a lower alkyl group having 1 to 3 carbon atoms, and R² and R³ represent a hydrogen atom or a lower alkyl group having 1 to 3 carbon atoms.

A copolymer can also be included, in addition to the homopolymer. Examples of the copolymer include such as poly(2,6-dimethyl-1,4-phenylene)ether, poly(2,6-diethyl-1,4-phenylene)ether, poly(2,6-dipropyl-1,4-phenylene)ether and poly(2-methyl-6-propyl-1,4-phenylene)ether.

The polystyrene encompasses a styrene polymer and a polymer containing styrene as main components and examples thereof include such as a general-purpose polystyrene, an impact-resistant polystyrene, an acrylonitrile-styrene (AS) resin and an acrylonitrile-butadiene-styrene (ABS) resin.

Examples of the polyolefin include polyolefins or oligomers such as polyethylene, polypropylene, a copolymer of ethylene and α-olefin, a copolymer of propylene and α-olefin, polybutene, and poly-4-methylpentene-1; and modified polyolefins provided with polarity, such as maleic acid.

Examples of the thermoplastic elastomer include such as a polystyrene-based thermoplastic elastomer, a polyolefin-based thermoplastic elastomer, a polyurethane-based thermoplastic elastomer and a polyamide-based thermoplastic elastomer.

The content of the alkaline metal titanate adhered to titanate, or the granular titanate may be appropriately selected according to the objective physical properties. For example, in the resin composition, the content of the alkaline metal titanate adhered to titanate, or the granular titanate may be preferably from 3 to 50% by weight.

The melt-kneading method is not specifically limited as long as it can apply a mechanical shear in a molten state of a polymer. Specifically, a kneading apparatus is preferably an extruder, and particularly preferably a twin-screw extruder. It is preferred to provide a vent port for the purpose of removing moisture and a low-molecular weight volatile component generated upon melt-kneading.

When a twin-screw extruder is used and two or more kinds of thermoplastic polymers are used, examples of the method to be proposed include, but are not limited to, a method of preliminarily mixing thermoplastic polymers using a blender, feeding the mixture through a feed port at the upstream side of the extruder and charging the granular titanate through a feed port at the downstream side, and a method of preliminarily mixing all the blended polymers with the titanate using a blender and feeding thorough a feed port. Screw arrangement of the extruder is not specifically limited and a kneading zone is preferably provided so as to sufficiently disperse polymers and to easily improve compatibility.

The alkaline metal titanate adhered to titanate or the granular titanate of the present invention can be used as the friction modifier.

The present invention also provides a friction material comprising an alkaline metal titanate adhered to titanate, or a granular titanate as a friction modifier. The friction material of the present invention contains a binder and a friction modifier as essential components.

It is possible to use, as the binder, those which are conventionally used in the field of friction material, and examples thereof include organic binders, for example, thermocurable resins such as a phenol resin, a formaldehyde resin, a melamine resin, an epoxy resin, an acrylic resin, an aromatic polyester resin and a urea resin, elastomers such as a natural rubber, a nitrile rubber, a butadiene rubber, a styrene-butadiene rubber, a chloroprene rubber, a polyisoprene rubber, an acrylic rubber, a high styrene rubber, a styrenepropylene and a diene copolymer; and thermoplastic resins such as a polyamide resin, a polyphenylene sulfide resin, a polyether resin, a polyimide resin, a polyether ether ketone resin and a thermoplastic liquid crystal polyester resin; and inorganic binders such as an alumina sol, a silica sol and a silicone resin. These binders can be used alone, or two or more kinds of binders, which are compatible with each other, may be used in combination.

As the friction modifier, the alkaline metal titanate adhered to titanate or the granular titanate of the present invention is used.

The friction material of the present invention may contain fibers. It is possible to use any fibers which are conventionally used in this field, and examples thereof include resin fibers such as aramid fibers; metal fibers such as steel fibers and brass fibers; carbon fibers; glass fibers; ceramic fibers; rock wools; and wood pulps. These fibers may be used alone, or two or more kinds of them may be used in combination. These fibers may be subjected to a surface treatment using silane-based coupling agents such as aminosilane-based, epoxysilane-based and vinylsilane-based coupling agents, titanate-based coupling agents and phosphate esters so as to improve dispersibility and adhesion with the binder.

The friction material of the present invention may contain friction modifiers which are conventionally used in this field as long as its preferred characteristics are not impaired. Examples of the friction modifier include organic matter powders such as vulcanized or unvalucanized natural or synthetic rubber, cashew resin, resin dust and rubber dust powders; inorganic matter powders such as carbon black, graphite, molybdenum disulfide, barium sulfate, calcium carbonate, clay, mica, talc, diatomaceuous earth, antigorite, sepiolite, montmorillonite, zeolite, sodium trititanate, sodium hexatitanate, potassium hexatitanate and potassium octatitanate powders; metal powders such as copper, aluminum, zinc and iron powders; and oxide powders such as alumina, silica, chromium oxide, titanium oxide and iron oxide powders. These conventional friction modifiers may be used alone, or two or more kinds of them may be used in combination.

Furthermore, the friction material of the present invention may contain one or more kinds of rust preventing agents, lubricants and abrasives.

The blending rate of each component in the friction material of the present invention can be appropriately selected according to various conditions, for example, kinds of binders to be used, fibers to be blended optionally, kinds of conventional friction modifiers and other additives, sliding characteristics and mechanical characteristics required to the friction materials to be obtained, and applications thereof. The amount of the binder may be from 5 to 60% by weight (preferably from 10 to 40% by weight), that of the friction modifier (also including a conventional friction modifier) may be from 1 to 80% by weight (preferably from 3 to 50% by weight), that of fibers is up to 60% by weight (preferably from 1 to 40% by weight), and that of other additives may be up to 60% by weight (preferably from 5 to 50% by weight) based on the total amount of the friction material.

The friction material of the present invention preferably contains fibers together with a binder and a friction modifier as essential components.

The friction material of the present invention can be manufactured according to the method for manufacturing a known friction material. For example, after fibers are optionally dispersed in a binder, a friction modifier and optionally blended other components are added in the form of a mixture or added separately, and then resulting mixture is injected into a mold, followed by binding and molding while heating under pressure.

Alternately, a binder is melt-kneaded using a twin-screw extruder and a friction modifier, optionally blended fibers and other components are added in the form of a mixture or added separately from a side hopper. After extrusion molding, the product may be formed into a desired shape.

Alternately, fibers are optionally dispersed in a binder and a friction modifier and other components are added to obtain a mixture. The mixture is dispersed in water, formed into a wet sheet on a wire and then dehydrated to make a sheet, followed by binding and molding while heating under pressure using a press to obtain a molded article. The article can be appropriately cut and abraded to form an article with a desired shape.

The alkaline metal titanate adhered to titanate and granular titanate of the present invention can be also used as a dielectric material. The alkaline metal titanate adhered to titanate and the granular titanate of the present invention contain an alkaline earth metal titanate, and dielectricity can be exhibited by the alkaline earth metal titanate.

The dielectric material composition of the present invention comprises the dielectric material of the present invention, namely, the alkaline metal titanate adhered to titanate or the granular titanate of the present invention.

The dielectric material composition of the present invention can be formed as a resin composition in which the alkaline metal titanate adhered to titanate or granular titanate of the present invention is contained in a resin. The resin composition includes a resin composition containing the above alkaline metal titanate adhered to titanate or granular titanate of the present invention.

The resin, which can be used in the resin composition, is not specifically limited and any known resin can be used. Examples thereof include such as polyethylene, polypropylene, polyisopropylene, polybutadiene, chlorinated polyethylene, polyetherimide, polyethersulfone, polyphenyleneether, polyetherketone-based resin (polyketone, polyetherketone, polyether ether ketone, polyether ketone ketone, polyether ether ketone, etc.), polycarbonate, polyolefin, polyester, polyacetal, thermoplastic polyurethane, polyamide, polyacrylate, polyvinyl chloride, polystyrene, polyvinylidene fluoride, polyvinylidene chloride, polyphenylsulfone, polysulfone, liquid crystal polymer, thermoplastic polyimide, polyallylate, polyethernitrile and thermoplastic elastomer.

The content of the alkaline metal titanate adhered to titanate, or the granular titanate may be appropriately selected according to the objective physical properties. For example, in the resin composition, the content of the alkaline metal titanate adhered to titanate, or the granular titanate may be within a range from 3 to 60% by weight.

The melt-kneading method is not specifically limited as long as it can apply a mechanical shear in a molten state of a polymer. Specific examples of a kneading apparatus include such as an extruder, a Banbury mixer, a pressure kneader and a twin roll, of which a twin-screw extruder is particularly preferred. It is preferred to provide a vent port for the purpose of removing moisture and a low-molecular weight volatile component generated upon melt-kneading.

When a twin-screw extruder is used and two or more kinds of thermoplastic polymers are used, examples of the method to be proposed include, but are not limited to, a method of preliminarily mixing thermoplastic polymers using a blender, feeding the mixture through a feed port at the upstream side of the extruder and charging the granular titanate through a feed port at the downstream side, and a method of preliminarily mixing all the blended polymers with the titanate using a blender and feeding thorough a feed port. Screw arrangement of the extruder is not specifically limited and a kneading zone is preferably provided so as to sufficiently disperse polymers and to easily improve compatibility.

The resin composition thus obtained can be formed into a molded article in accordance with a conventional molding method such as an injection molding, extrusion molding, calender molding, coating molding, or press molding method. The molded article thus obtained can be used in applications, for example, cellular phones, ITS(s), GPS(s), antenna materials such as wireless LAN, laminated circuit boards, injection molded substrates, radio frequency substrates, various connectors and highspeed connectors.

### EXAMPLES

The present invention will be described below in further detail with reference to examples. However, the present invention is not limited to the following examples, and it is appropriately changeable without departing from the scope of the present invention.

### Example 1

62.84 g of titanium oxide, 27.93 g of potassium carbonate, 4.44 g of lithium carbonate and 4.30 g of calcium hydroxide are mixed. The resulting mixture was placed in an alumina crucible, calcined in an electric furnace at 980°C for 4 hours and then slowly cooled to obtain a calcined substance. This calcined substance was coarsely ground and subjected to hydrolysis washing. The slurry concentration of the aqueous solution was adjusted to 5%. After hydrolysis washing for 2 hours, the slurry was passed through a sieve of 150 mesh. The slurry passed through the sieve was collected by filtration and the resulting crystal was dried at 110°C for 2 hours.

The resulting crystal has a median size of 14 µm (laser diffraction) and a tabular pale pink powder, and an X-ray diffraction chart revealed that the crystal was a composite of lithium potassium titanate (KₓLiₓTi_{2-0.5x}0₈: corresponding to an ICDD card 25-1353) and calcium titanate (Perovskite: CaTiO₃) and composition analysis revealed that the content of calcium titanate was 10.9% by weight. The content of lithium potassium titanate was 0.494 mol and the content of calcium titanate was 0.080 mol, in molar terms, and a molar ratio was 0.494:0.080 = 86.1:13.9.

### Example 2

61.71 g of titanium oxide, 25.11 g of potassium carbonate, 3.99 g of lithium carbonate and 8.69 g of calcium hydroxide are mixed. The resulting mixture was placed in an alumina crucible, calcined in an electric furnace at 980°C for 4 hours and then slowly cooled to obtain a calcined substance. This calcined substance was coarsely ground and subjected to hydrolysis washing. The slurry concentration of the aqueous solution was adjusted to 5%. After hydrolysis washing for 2 hours, the slurry was passed through a sieve of 150 mesh. The slurry passed through the sieve was collected by filtration and the resulting crystal was dried at 110°C for 2 hours.

The resulting crystal has a median size of 11 µm (laser diffraction) and a tabular pale pink powder, and an X-ray diffraction chart revealed that the crystal was a composite of lithium potassium titanate (KₓLiₓTi_{2-0.5x}0₈: corresponding to an ICDD card 25-1353) and calcium titanate (Perovskite: CaTiO₃) and composition analysis revealed that the content of calcium titanate was 22.2% by weight. The content of lithium potassium titanate was 0.432 mol and the content of calcium titanate was 0.163 mol, in molar terms, and a molar ratio was 0.432:0.163 = 72.2:27.8. Dielectric physical properties of the crystal were measured. As a result, εr = 5.70, tan δ = 8.70 × 10⁻³ (cavity resonator method (3 GHz) at a resin composite (filler: 50% by weight)).

### Example 3

100 g of the compound obtained in Example 2 is dissolved in 400 cc of water. The pH of the slurry is adjusted to 6.8 by adding sulfuric acid to the slurry. After aging for 2 hours, the slurry was filtered and washed thereby separating a solid, which was calcined at about 600°C to obtain an alkaline metal titanate adhered to lithium potassium titanate with the changed composition (K_{0.80}Li_{0.27}Ti_{1.73}O₄ → K_{0.5-0.7}Li_{0.27}Ti_{1.73}O_{3.85-3.95}).

### Example 4

60.55 g of titanium oxide, 22.23 g of potassium carbonate, 3.53 g of lithium carbonate and 13.19 g of calcium hydroxide are mixed. The resulting mixture was placed in an alumina crucible, calcined in an electric furnace at 980°C for 4 hours and then slowly cooled to obtain a calcined substance. This calcined substance was coarsely ground and subjected to hydrolysis washing. The slurry concentration of the aqueous solution was adjusted to 5%. After hydrolysis washing for 2 hours, the slurry was passed through a sieve of 150 mesh. The slurry passed through the sieve was collected by filtration and the resulting crystal was dried at 110°C for 2 hours.

The resulting crystal has a median size of 9 µm (laser diffraction) and a tabular pale pink powder, and an X-ray diffraction chart revealed that the crystal was a composite of lithium potassium titanate (KₓLiₓTi_{2-0.5x}0₈: corresponding to an ICDD card 25-1353) and calcium titanate (Perovskite: CaTiO₃) and composition analysis revealed that the content of calcium titanate was 33.9% by weight. The content of lithium potassium titanate was 0.367 mol and the content of calcium titanate was 0.249 mol, in molar terms, and a molar ratio was 0.367:0.249 = 60.0:40.0.

### Example 5

59.38 g of titanium oxide, 19.27 g of potassium carbonate, 3.06 g of lithium carbonate and 17.79 g of calcium hydroxide are mixed. The resulting mixture was placed in an alumina crucible, calcined in an electric furnace at 980°C for 4 hours and then slowly cooled to obtain a calcined substance. This calcined substance was coarsely ground and subjected to hydrolysis washing. The slurry concentration of the aqueous solution was adjusted to 5%. After hydrolysis washing for 2 hours, the slurry was passed through a sieve of 150 mesh. The slurry passed through the sieve was collected by filtration and the resulting crystal was dried at 110°C for 2 hours.

The resulting crystal has a median size of 12 µm (laser diffraction) and a tabular pale pink powder, and an X-ray diffraction chart revealed that the crystal was a composite of lithium potassium titanate (KₓLiₓTi_{2-0.5x}O₈: corresponding to an ICDD card 25-1353) and calcium titanate (Perovskite: CaTiO₃) and composition analysis revealed that the content of calcium titanate was 40.8% by weight. The content of lithium potassium titanate was 0.329 mol and the content of calcium titanate was 0.300 mol, in molar terms, and a molar ratio was 0.329:0.300 = 52.3:47.7.

### Example 6

58.16 g of titanium oxide, 16.25 g of potassium carbonate, 2.58 g of lithium carbonate and 22.50 g of calcium hydroxide are mixed. The resulting mixture was placed in an alumina crucible, calcined in an electric furnace at 980°C for 4 hours and then slowly cooled to obtain a calcined substance. This calcined substance was coarsely ground and subjected to hydrolysis washing. The slurry concentration of the aqueous solution was adjusted to 5%. After hydrolysis washing for 2 hours, the slurry was passed through a sieve of 150 mesh. The slurry passed through the sieve was collected by filtration and the resulting crystal was dried at 110°C for 2 hours.

The resulting crystal has a median size of 7 µm (laser diffraction) and a tabular pale pink powder, and an X-ray diffraction chart revealed that the crystal was a composite of lithium potassium titanate (KₓLiₓTi_{2-0.5x}0₈: corresponding to an ICDD card 25-1353) and calcium titanate (Perovskite: CaTiO₃) and composition analysis revealed that the content of calcium titanate was 51.3% by weight. The content of lithium potassium titanate was 0.271 mol and the content of calcium titanate was 0.377 mol, in molar terms, and a molar ratio was 0.271:0.377 = 41.1:58.8.

### Example 7

58.31 g of titanium oxide, 26.83 g of potassium carbonate, 10.07 g of magnesium hydroxide and 4.30 g of calcium hydroxide are mixed. The resulting mixture was placed in an alumina crucible, calcined in an electric furnace at 1,080°C for 4 hours and then slowly cooled to obtain a calcined substance. This calcined substance was coarsely ground and subjected to hydrolysis washing. The slurry concentration of the aqueous solution was adjusted to 5%. After hydrolysis washing for 2 hours, the slurry was passed through a sieve of 150 mesh. The slurry passed through the sieve was collected by filtration and the resulting crystal was dried at 110°C for 2 hours.

The resulting crystal has a median size of 6 µm (laser diffraction) and a tabular pale pink powder, and an X-ray diffraction chart revealed that the crystal was a composite of magnesium potassium titanate (K_{0.8}Mg_{0.4}Ti_{1.6}0₄) and calcium titanate (Perovskite: CaTiO₃) and composition analysis revealed that the content of calcium titanate was 11.9% by weight. The content of magnesium potassium titanate was 0.488 mol and the content of calcium titanate was 0.087 mol, in molar terms, and a molar ratio was 0.488:0.087 = 84.8:15.2.

### Example 8

57.64 g of titanium oxide, 24.12 g of potassium carbonate, 9.06 g of magnesium hydroxide and 8.69 g of calcium hydroxide are mixed for 15 minutes. The resulting mixture was placed in an alumina crucible, calcined in an electric furnace at 1,080°C for 4 hours and then slowly cooled to obtain a calcined substance. This calcined substance was coarsely ground and subjected to hydrolysis washing. The slurry concentration of the aqueous solution was adjusted to 5%. After hydrolysis washing for 2 hours, the slurry was passed through a sieve of 150 mesh. The slurry passed through the sieve was collected by filtration and the resulting crystal was dried at 110°C for 2 hours.

The resulting crystal has a median size of 5 µm (laser diffraction) and a tabular pale pink powder, and an X-ray diffraction chart revealed that the crystal was a composite of magnesium potassium titanate (K_{0.8}Mg_{0.4}Ti_{1.6}0₄) and calcium titanate (Perovskite: CaTiO₃) and composition analysis revealed that the content of calcium titanate was 22.8% by weight. The content of magnesium potassium titanate was 0.428 mol and the content of calcium titanate was 0.168 mol, in molar terms, and a molar ratio was 0.428:0.168 = 71.4:28.6. Dielectric physical properties of the crystal were measured. As a result, εr = 5.36, tan δ = 3.58 × 10⁻³ (cavity resonator method (3 GHz) at a resin composite (filler: 50% by weight)).

### Example 9

100 g of the compound obtained in Example 8 is dissolved in 400 cc of water. The pH of the slurry is adjusted to 6.8 by adding sulfuric acid to the slurry. After aging for 2 hours, the slurry was filtered and washed thereby separating a solid, which was calcined at about 600°C to obtain an alkaline metal titanate adhered to lithium potassium titanate with the changed composition (K_{0.8}Mg_{0.4}Ti_{1.6}0₄ → K_{0.5-0.7}Mg_{0.4}Ti_{1.6}O_{3.7-4.0}).

### Example 10

56.95 g of titanium oxide, 21.36 g of potassium carbonate, 8.01 g of magnesium hydroxide and 13.18 g of calcium hydroxide are mixed for 15 minutes. The resulting mixture was placed in an alumina crucible, calcined in an electric furnace at 1,080°C for 4 hours and then slowly cooled to obtain a calcined substance. This calcined substance was coarsely ground and subjected to hydrolysis washing. The slurry concentration of the aqueous solution was adjusted to 5%. After hydrolysis washing for 2 hours, the slurry was passed through a sieve of 150 mesh. The slurry passed through the sieve was collected by filtration and the resulting crystal was dried at 110°C for 2 hours.

The resulting crystal has a median size of 4 µm (laser diffraction) and a tabular pale pink powder, and an X-ray diffraction chart revealed that the crystal was a composite of magnesium potassium titanate (K_{0.8}Mg_{0.4}Ti_{1.6}O₄) and calcium titanate (Perovskite: CaTiO₃) and composition analysis revealed that the content of calcium titanate was 35.2% by weight. The content of a magnesium potassium titanate compound was 0.361 mol and the content of calcium titanate was 0.254 mol, in molar terms, and a molar ratio was 0.361:0.254 = 58.3:41.7.

### Example 11

56.25 g of titanium oxide, 18.52 g of potassium carbonate, 6.95 g of magnesium hydroxide and 17.79 g of calcium hydroxide are mixed for 15 minutes. The resulting mixture was placed in an alumina crucible, calcined in an electric furnace at 1,120°C for 4 hours and then slowly cooled to obtain a calcined substance. This calcined substance was coarsely ground and subjected to hydrolysis washing. The slurry concentration of the aqueous solution was adjusted to 5%. After hydrolysis washing for 2 hours, the slurry was passed through a sieve of 150 mesh. The slurry passed through the sieve was collected by filtration and the resulting crystal was dried at 110°C for 2 hours. The resulting crystal has a median size of 4 µm (laser diffraction) and a tabular pale pink powder, and an X-ray diffraction chart revealed that the crystal was a composite of magnesium potassium titanate (K_{0.8}Mg_{0.4}Ti_{1.6}O₄) and calcium titanate (Perovskite: CaTiO₃) and composition analysis revealed that the content of calcium titanate was 46.1% by weight. The content of a magnesium potassium titanate compound was 0.297 mol and the content of calcium titanate was 0.339 mol, in molar terms, and a molar ratio was 0.297:0.339 = 46.8:53.2.

### Example 12

55.53 g of titanium oxide, 15.62 g of potassium carbonate, 5.86 g of magnesium hydroxide, 22.50 g of calcium hydroxide and 0.50 g of stearic acid are mixed in a vibration mill for 15 minutes. The resulting mixture was placed in an alumina crucible, calcined in an electric furnace at 1,120°C for 4 hours and then slowly cooled to obtain a calcined substance. This calcined substance was coarsely ground and subjected to hydrolysis washing. The slurry concentration of the aqueous solution was adjusted to 5%. After hydrolysis washing for 2 hours, the slurry was passed through a sieve of 150 mesh. The slurry passed through the sieve was collected by filtration and the resulting crystal was dried at 110°C for 2 hours. The resulting crystal has a median size of 8 µm (laser diffraction) and a tabular pale pink powder, and an X-ray diffraction chart revealed that the crystal was a composite of magnesium potassium titanate (K_{0.8}Mg_{0.4}Ti_{1.6}O₄) and calcium titanate (Perovskite: CaTiO₃) and composition analysis revealed that the content of calcium titanate was 55.0% by weight. The content of a magnesium potassium titanate compound was 0.248 mol and the content of calcium titanate was 0.405 mol, in molar terms, and a molar ratio was 0.248:0.405 = 37.8:62.2. The crystal was mixed with a polyethylene resin in a concentration of 50% by weight to prepare a dielectric material composition and dielectric physical properties of the dielectric material composition were measured. As a result, εr = 5.78, tan δ = 3.28 × 10⁻³ (cavity resonator method (3 GHz)).

### Example 13

100 g of the compound obtained in Example 2 is dissolved in 400 cc of water. The pH of the slurry is adjusted to 1.6 by adding sulfuric acid to the slurry. After aging for 2 hours, the slurry is filtered and washed, and the resulting wet crystal is further formed into an aqueous solution (slurry concentration: 20%). The pH of the slurry is adjusted to 9.6 by adding an aqueous caustic potash solution to the slurry. After aging for 4 hours aging, the slurry is filtered, dried and calcined (at 600°C for one hour). The resulting crystal has a median size of 7 µm (laser diffraction) and a tabular pale pink powder, and an X-ray diffraction chart revealed that the crystal was a composite of potassium titanate (K₂Ti₈O₁₇) and calcium titanate (Perovskite: CaTi0₃) and composition analysis revealed that the content of calcium titanate was 21.1% by weight. The content of potassium octatitanate was 0.865 mol and the content of calcium titanate was 0.155 mol, in molar terms, and a molar ratio was 0.865:0.155 = 84.8:15.2

### Example 14: Synthesis of granular titanate

300 g of the compound obtained in Example 8 was charged in a mixer, stirred (agitator: 200 rpm, chopper: 400 rpm) for one minute, and then 45 g of a binder (a mixed solution of 9 g of aminopropyltriethoxysilane and 36 g of water) was gradually added over 2 minutes. After the completion of dropwise addition and stirring for 5 minutes, the mixture was discharged and then dried at 110°C while standing for 5 hours, followed by passing through a sieve of 850 µm to obtain a product. Yield of the product was 77%. A sieve distribution state by a dry method (vibration conditions: amplitude: 1 mm, time: 2 min) was 850 to 250 µm: 37.5%, 250 to 150µm: 14.5%, 150 to 75 µm: 22%, 75 µm or less: 26%.

### Evaluation by Air Classification Treatment

The crystals obtained in Example 2, Example 8 and Example 13 were subjected to an air classification treatment, respectively, so as to confirm that the resulting crystal was a composite or a mixture. As a result, it was confirmed that all of these crystals are composites since they are not separated into a potassium titanate compound and calcium titanate.

For comparison, a mixture of lithium potassium titanate and calcium titanate was subjected to an air classification treatment in the same manner as described above. As a result, the mixture was clearly separated into lithium potassium titanate and calcium titanate.

### SEM Observation and Element Mapping

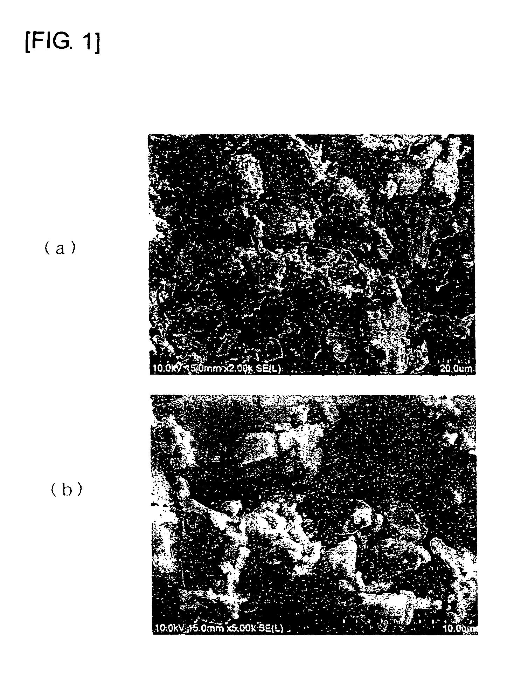

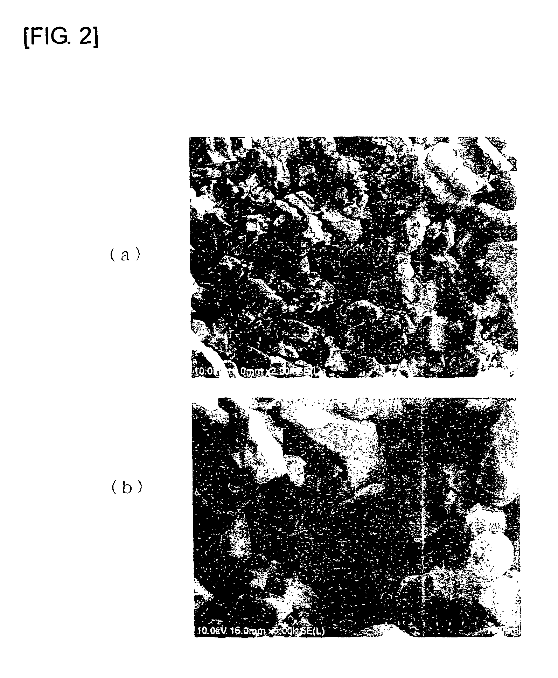

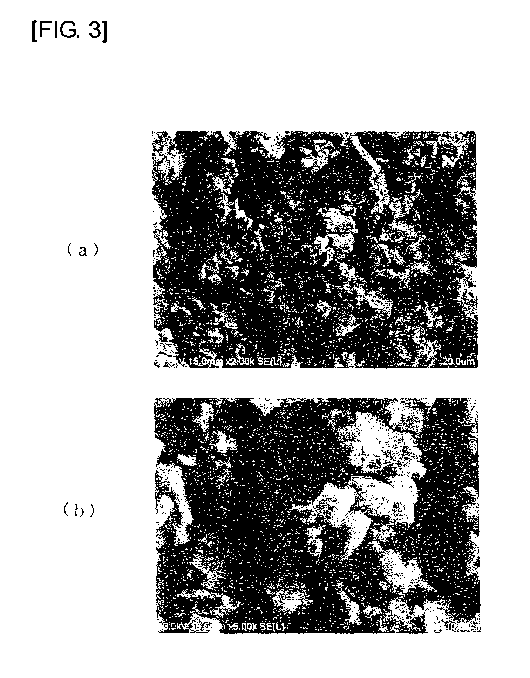

With respect to the crystals obtained in Example 2, Example 8 and Example 12, scanning electron microscope (SEM) observation was carried out. Fig. 1 shows a micrograph of the crystal of Example 2, in which Fig. 1a shows a micrograph at a magnification of 2,000 and Fig. 1b shows a micrograph at a magnification of 5,000. Fig. 2 shows a micrograph of the crystal of Example 8, in which Fig. 2a shows a micrograph at a magnification of 2,000 and Fig. 2b shows a micrograph at a magnification of 5,000. Fig. 3 shows a micrograph of the crystal of Example 12, in which Fig. 3a shows a micrograph at a magnification of 2,000 and Fig. 3b shows a micrograph at a magnification of 5,000.

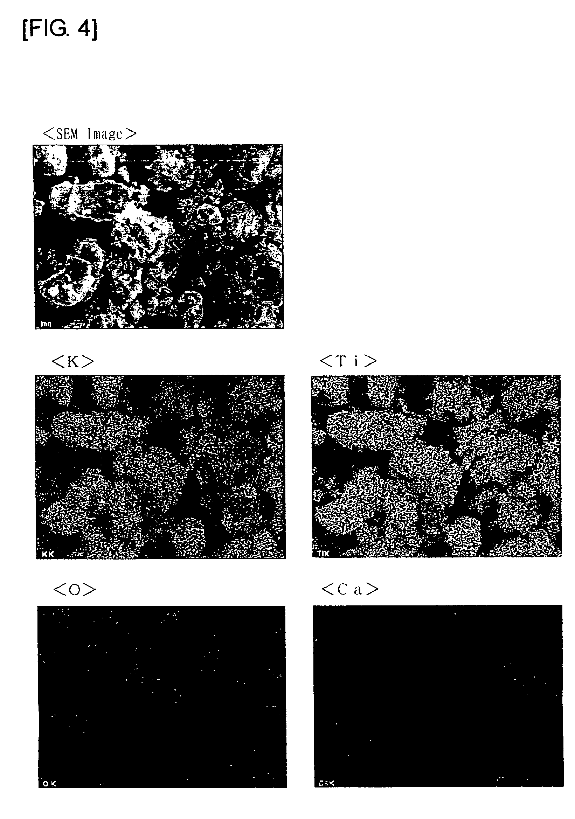

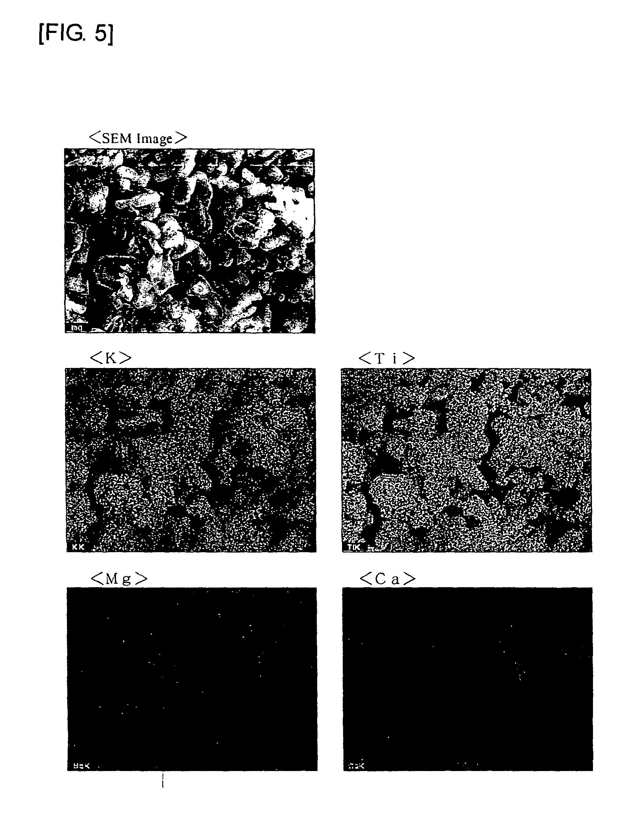

With respect to the crystals of Example 2 and Example 8, element mapping analysis was carried out. Fig. 4 shows element mapping of the crystal of Example 2, and Fig. 5 shows element mapping of the crystal of Example 8. In Fig. 4 and Fig. 5, (SEM Image) is a SEM micrograph, in which (K) shows potassium mapping, (Ti) shows titanium mapping, (O) shows oxygen mapping, and (Ca) shows calcium mapping, respectively.

As is apparent from the SEM micrograph and the element map micrograph, calcium titanate adheres onto lithium potassium titanate or magnesium potassium titanate.

### Production of Friction Material

According to the composition shown in Table 1, friction material pads of Nos. 1 to 10 were produced using a phenol resin, an aramid pulp, barium sulfate, inorganic fibers, graphite and copper, and fillers (friction modifiers) of (1) to (10).

The friction material pad was produced by mixing various raw materials using a Loedige mixer, followed by temporary forming (25 MPa) and thermoforming (150°C, 20 MPa) of the mixture and further subjecting to a heat treatment (160 to 210°C).

**[Table 1]**

| Composition (% by weight) | No.1 | No.2 | No.3 | No.4 | No.5 | No.6 | No.7 | No.8 | No.9 | No.10 | No.11 |
|---|---|---|---|---|---|---|---|---|---|---|---|
| Phenol Resin (Binder) | 8 | 8 | 8 | 8 | 8 | 8 | 8 | 8 | 8 | 8 | 8 |
| Aramid Pulp (Reinforcing Fiber) | 8 | 8 | 8 | 8 | 8 | 8 | 8 | 8 | 8 | 8 | 8 |
| Friction Dust (Friction Modifier) | | | | | | | | | | | |
| Barium Sulfate (Filler) | 28 | 28 | 28 | 28 | 28 | 28 | 28 | 28 | 28 | 28 | 28 |
| Inorganic Fiber(Reinforcing Fiber) | 26 | 26 | 26 | 26 | 26 | 26 | 26 | 26 | 26 | 26 | 26 |
| Graphite (Lubricant) | 6 | 6 | 6 | 6 | 6 | 6 | 6 | 6 | 6 | 6 | 6 |
| Copper (Abrasive) | 5 | 5 | 5 | 5 | 5 | 5 | 5 | 5 | 5 | 5 | 5 |
| (1) Filler of Example 2 | 19 | - | - | - | - | - | - | - | - | - | - |
| (2) Filler of Example 6 | - | 19 | - | - | - | - | - | - | - | - | - |
| (3) Filler of Example 8 | - | - | 19 | - | - | - | - | - | - | - | - |
| (4) Filler of Example 12 | - | - | - | 19 | - | - | - | - | - | - | - |
| (5) Filler of Example 13 | - | - | - | - | 19 | - | - | - | - | - | - |
| (6) Filler of Example 14 | - | - | - | - | - | 19 | - | - | - | - | - |
| (7) Lithium Potassium Titanate | - | - | - | - | - | - | 19 | - | - | - | - |
| (8) Magnesium Potassium Titanate | - | - | - | - | - | - | - | 19 | - | - | - |
| (9) Calcium Titanate | - | - | - | - | - | - | - | - | 19 | - | - |
| (10) (6) / (8) = 8 / 2 | - | - | - | - | - | - | - | - | - | 19 | - |
| (11) (7) / (8) = 8 / 2 | - | - | - | - | - | - | - | - | - | - | 19 |
| Total | 100 | 100 | 100 | 100 | 100 | 100 | 100 | 100 | 100 | 100 | 100 |

### (Evaluation of Friction Material Pad)

The friction material pads Nos. 1 to 10 thus obtained were evaluated by the following procedure. Evaluation was carried out based on the method of test code C-406 of a JASO test.

**[Table 2]**

| | µ | Wear Amount of Pad (mm) |
|---|---|---|
| < Examples > | | |
| No.1 | 0.37 | 0.311 |
| No.2 | 0.40 | 0.309 |
| No.3 | 0.38 | 0.313 |
| No.4 | 0.41 | 0.315 |
| No.5 | 0.41 | 0.314 |
| No.6 | 0.38 | 0.307 |
| <Comparative Examples> | | |
| No.7 | 0.35 | 0.303 |
| No.8 | 0.36 | 0.308 |
| No.9 | 0.42 | 0.340 |
| No.10 | 0.37 | 0.325 |
| No.11 | 0.37 | 0.328 |

As is apparent from the results shown in Table 2, the friction material pads Nos. 1 to 6 of Examples have improved friction coefficient (µ) characteristics as compared with the friction material pads Nos. 7 and 8 of Comparative Examples. The friction material pads Nos. 1 to 6 are slightly inferior to No. 7 and No. 8 in wear characteristics indicated by a wear amount of the pad, but have improved wear characteristics as compared with No. 10 and No. 11 in which titanate and alkaline earth metal titanate are simply blended.

## Claims

1. An alkaline metal titanate adhered to titanate,
wherein an alkaline earth metal titanate represented by the formula (2) is adhered onto the surface of titanate represented by the formula (1):
AₓM_{y}□Ti_{2-(y+z)}O₄ (1)
wherein A and M are different from each other and represent a mono- to trivalent metal, □ represents a defective portion of Ti, X represents a positive real number which satisfies 0 < X < 1.0, and y and z each represents 0 or a positive real number which satisfies 0 < y + z < 1.0, and
BO·TiO₂ (2)
wherein B represents one or more kinds of an alkaline earth metals.

2. The alkaline metal titanate adhered to titanate according to claim 1, wherein the titanate represented by the formula (1) is lepidocrocite type titanate.

3. The alkaline metal titanate adhered to titanate according to claim 2, wherein the titanate represented by the formula (1) is lithium potassium titanate or magnesium potassium titanate.

4. An alkaline metal titanate adhered to titanate,
wherein an alkaline earth metal titanate represented by the formula (2) is adhered onto the surface of titanate (3) obtained by calcining titanate represented by the formula (1) after subjecting to an acid treatment:
AₓM_{y}□Ti_{2-(y+Z)}O₄ (1)
wherein A and M are different from each other and represent a mono- to trivalent metal, □ represents a defective portion of Ti, X represents a positive real number which satisfies 0 < X < 1.0, and y and z each represents 0 or a positive real number which satisfies 0 < y + z < 1.0, and
BO·TiO₂ (2)
wherein B represents one or more kinds of an alkaline earth metals.

5. The alkaline metal titanate adhered to titanate according to claim 4, wherein the titanate (3) is lithium potassium titanate represented by K_{0.5-0.7}Li_{0.27}Ti_{1.73}O_{3.85-3.95} or magnesium potassium titanate represented by K_{0.2-0.7}Mg_{0.4}Ti_{1.6}O_{3.7-4}.

6. An alkaline metal titanate adhered to titanate,
wherein an alkaline earth metal titanate represented by the formula (2) is adhered onto the surface of a tabular potassium octatitanate:
BO·TiO₂ (2)
wherein B represents one or more kinds of an alkaline earth metals.

7. The alkaline metal titanate adhered to titanate according to any one of claims 1 to 6, wherein the alkaline earth metal titanate represented by the formula (2) is calcium titanate.

8. The alkaline metal titanate adhered to titanate according to any one of claims 1 to 7, wherein the alkaline metal titanate adhered to titanate is a tabular substance.

9. The alkaline metal titanate adhered to titanate according to any one of claims 1 to 8, wherein a molar ratio of the titanate represented by the formula (1), or the titanate (3), or the tabular potassium octatitanate to the alkaline earth metal titanate represented by the formula (2) is 99-30:1-70.

10. A granular titanate obtained by molding the alkaline metal titanate adhered to titanate according to any one of claims 1 to 9 using a binder.

11. A granular titanate obtained by molding a mixture containing:
(a) the alkaline metal titanate adhered to titanate according to any one of claims 1 to 9,
(b) at least one kind of a compound selected from titanate represented by the formula (1), titanate (3), a tabular potassium octatitanate, and a composite tabular metal titanate, and
(c) a binder.

12. A method for manufacturing the alkaline metal titanate adhered to titanate according to any one of claims 1 to 9, wherein a mixture containing an A source, an M source, a B source and a Ti source is calcined at 600 to 1,300°C.

13. A method for manufacturing a granular titanate, wherein the alkaline metal titanate adhered to titanate according to any one of claims 1 to 9 is molded using a binder.

14. A method for manufacturing a granular titanate,
wherein
(a) the alkaline metal titanate adhered to titanate according to any one of claims 1 to 9,
(b) at least one kind of a compound selected from titanate represented by the formula (1), titanate (3), a tabular potassium octatitanate and a composite tabular metal titanate, and
(c) a binder
are mixed, and the mixture is molded.

15. A resin composition comprising 3 to 50% by weight of the alkaline metal titanate adhered to titanate according to any one of claims 1 to 9 or the granular titanate according to claim 10 or 11.

16. A friction modifier comprising the alkaline metal titanate adhered to titanate according to any one of claims 1 to 9 or the granular titanate according to claim 10 or 11.

17. A friction material comprising the friction modifier according to claim 16.

18. The friction material according to claim 16, wherein the friction material contains 3 to 50% by weight of the friction modifier.

19. A dielectric material comprising the alkaline metal titanate adhered to titanate according to any one of claims 1 to 9 or the granular titanate according to claim 10 or 11.

20. A dielectric material composition comprising the dielectric material according to claim 19.

21. The dielectric material composition according to claim 20, wherein the dielectric material composition contains 3 to 50% by weight of the dielectric material.
